# EUROPÄISCHE PATENTSCHRIFT

(11) **EP 2 077 175 B1**
(45) Veröffentlichungstag und Bekanntmachung des Hinweises auf die Patenterteilung: **11.07.2012**
(21) Anmeldenummer: 08022474.4
(22) Anmeldetag: 27.12.2008
(51) Int. Cl.: B23D 21/08, B23D 47/12

(54) **Rohrtrennwerkzeug**
Pipe separating partition
Outil de séparation de tuyaux

(30) Priorität: 04.01.2008 DE 102008004285
(43) Veröffentlichungstag der Anmeldung: 08.07.2009
(73) Patentinhaber: REMS-WERK Christian Föll und Söhne GmbH, 71332 Waiblingen (DE)
(72) Erfinder: Wagner, Rudolf, Dr.-Ing., 70376 Stuttgart (DE)
(74) Vertreter: Jackisch-Kohl, Anna-Katharina

(56) Entgegenhaltungen:
- EP-A- 0 945 053
- EP-A- 1 243 367
- DE-A1- 2 413 525
- DE-A1- 3 216 935
- DE-A1- 3 345 875
- US-A- 5 099 577

## Beschreibung

Die Erfindung betrifft ein Rohrtrennwerkzeug nach dem Oberbegriff des Anspruches 1, welcher auf der DE 32 16 935 basiert.

Es ist ein Rohrtrennwerkzeug bekannt, das aus zwei um eine Achse gegeneinander verschwenkbaren Werkzeugteilen besteht. Die Schwenkachse liegt im Bereich unterhalb der Achsen von angetriebenen Abstützrollen sowie der Drehachse des Schneidrades. Der das Schneidrad tragende Teil des Werkzeugteiles ist in Richtung auf den anderen Werkzeugteil gebogen. Dadurch kann dieses Rohrtrennwerkzeug nur für verhältnismäßig kleine Rohrdurchmesser eingesetzt werden.

Der Erfindung liegt die Aufgabe zugrunde, das gattungsgemäße Rohrtrennwerkzeug so auszubilden, dass es zum Durchtrennen von Rohren mit unterschiedlichsten Durchmessern eingesetzt werden kann.

Diese Aufgabe wird durch ein Rohrtrennwerkzeug erfindungsgemäß mit denMerkmalen des Anspruches 1 gelöst.

Beim erfindungsgemäßen Rohrtrennwerkzeug liegt die Schwenkachse in der Grundstellung der beiden Werkzeugteile im Bereich oberhalb der Achsen der Abstützrollen. Dadurch können zwischen die beiden Werkzeugteile Rohre mit kleinem, aber auch mit großem Durchmesser eingesetzt und mit dem Schneidrad zuverlässig durchgetrennt werden.

Bei einer Ausbildung entsprechend Anspruch 5 ist die Schwenkachse so gelegt, dass unabhängig vom Durchmesser des durchzutrennenden Rohres der Kontaktbereich zwischen dem Schneidrad und dem Rohr zumindest etwa in einer zwischen den Achsen von lagerteilseitigen Abstützrollen sich erstreckenden Ebene liegt, die senkrecht zu einer die Achsen der lagerteilseitigen Abstützrollen enthaltenden Ebene verläuft. Dadurch wird erreicht, dass beim Trennvorgang das Rohr fest gegen die lagerseitigen Abstützrollen gedrückt wird. Dadurch ist ein einwandfreier Trennschnitt gewährleistet.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung ein erfindungsgemäßes Rohrtrennwerkzeug,
- Fig. 2: das erfindungsgemäße Rohrtrennwerkzeug gemäß Fig. 1 in Seitenansicht,
- Fig. 3: einen Schnitt durch den Antrieb für ein Schneidrad des erfindungsgemäßen Rohrtrennwerkzeuges,
- Fig. 4: in vergrößerter Darstellung und in Seitenansicht die Kraftverhältnisse beim Durchtrennen eines Rohres mit großem Durchmesser,

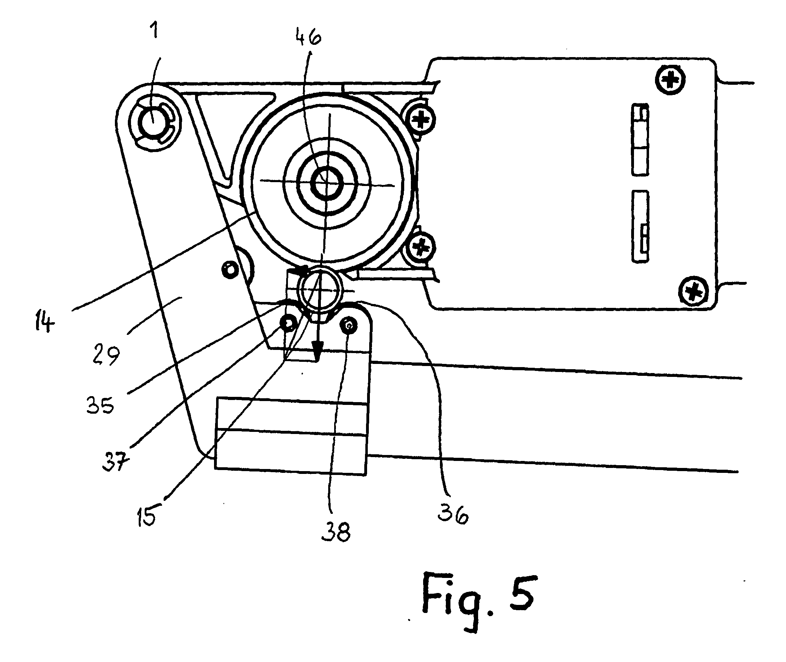

- Fig. 5: in einer Darstellung entsprechend Fig. 4 die Kraftverhältnisse beim Durchtrennen eines Rohres mit kleinem Durchmesser,
- Fig. 6: in perspektivischer Darstellung ein Kegelrad, das mit dem Schneidrad des erfindungsgemäßen Rohrtrennwerkzeuges verbunden wird.

Das Rohrtrennwerkzeug ist ein Elektrowerkzeug, das bequem gehandhabt und getragen werden kann. Das Rohrtrennwerkzeug hat zwei durch eine Achse 1 schwenkbar miteinander verbundene Werkzeugteile 2 und 3. Der Werkzeugteil 2 hat ein Gehäuse 4, das vorteilhaft aus zwei Gehäuseteilen 5, 6 besteht, die durch Schrauben 7 lösbar miteinander verbunden sind. Die Gehäuseteile 5, 6 erstrecken sich im Ausführungsbeispiel über die gesamte Länge des Gehäuses 4 und sind vorteilhaft spiegelsymmetrisch zueinander ausgebildet. Es ist auch möglich, das Gehäuse 4 aus einzelnen, in Längsrichtung hintereinander liegenden Gehäuseteilen zu gestalten, die ebenfalls vorzugsweise lösbar miteinander verbunden sind.

Das Gehäuse 4 hat einen endseitigen schmalen Gehäusebereich 8, in dem sich die (nicht dargestellte) Elektronik befindet. An das freie Ende des Gehäusebereiches 8 ist eine Netzanschlussleitung 9 angeschlossen.

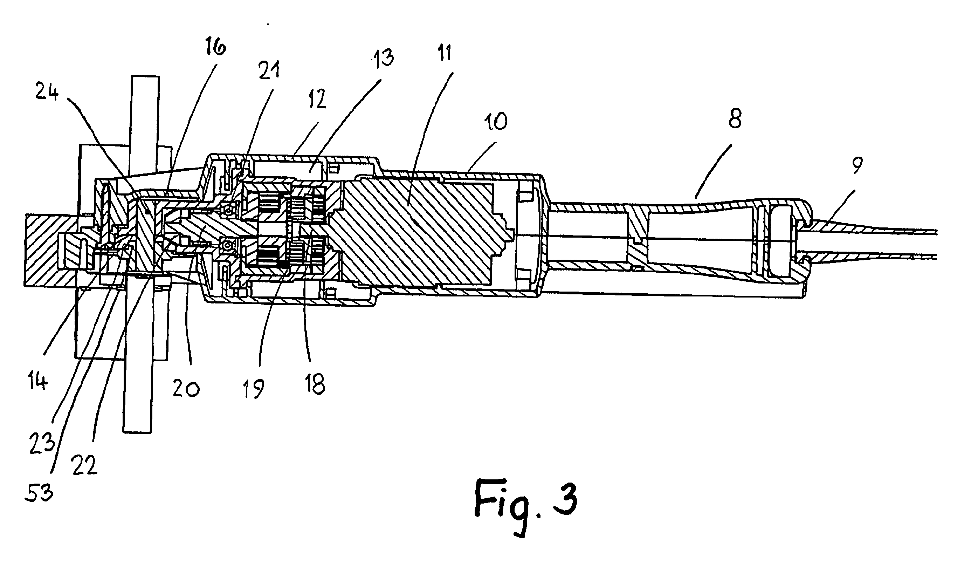

Der Gehäusebereich 8 geht in einen breiteren und höheren Gehäusebereich 10 über, in dem ein Antriebsmotor 11, vorzugsweise ein Elektromotor, untergebracht ist. In Fig. 3 ist der Antriebsmotor 11 nur schematisch dargestellt.

An den Gehäusebereich 10 schließt seinerseits ein in der Breite und Dicke größerer Gehäusebereich 12 an, in dem ein Untersetzungsgetriebe 13 untergebracht ist. Über dieses Getriebe 13 ist der Motor 11 mit einem Schneidrad 14 verbunden, mit dem ein Rohr 15 durchgetrennt wird. Das Schneidrad 14 ist in einem verjüngten Gehäuseansatz 16 untergebracht, das an der vom Gehäusebereich 8 abgewandten Seite des Gehäusebereiches 12 vorsteht. Vorteilhaft ist der Gehäuseansatz 16 einstückig mit dem Gehäusebereich 12 ausgebildet.

Beim Einsatz wird das Rohrtrennwerkzeug am Gehäusebereich 8 gehalten. Da es von der Schwenkachse 1 einen großen Abstand hat, können somit sehr hohe Kräfte beim Trennvorgang durch den Anwender des Rohrtrennwerkzeuges auf das durchzutrennende Rohr 15 ausgeübt werden. Der Gehäusebereich 8 ist hinsichtlich Breite und Höhe so ausgebildet, dass er bequem mit der Hand umgriffen werden kann. Der dem Werkzeugteil 3 zugewandte Teil 17 des Gehäusebereiches 8 ist als Vorsprung ausgebildet und verhindert, dass die Hand beim Arbeiten mit dem Rohrtrennwerkzeug versehentlich vom Gehäusebereich 8 abrutscht. Da die Gehäusebereiche 8, 10, 12 und der Gehäuseansatz 16 axial hintereinander angeordnet sind, hat das Gehäuse 4 eine sehr schlanke Form.

Das Untersetzungsgetriebe 13 ist sehr kompakt ausgebildet, so dass es in einem verhältnismäßig schmalen Gehäusebereich 12 untergebracht werden kann. Das Untersetzungsgetriebe 13 kann grundsätzlich jede Getriebegestaltung aufweisen. Es muss lediglich die hohe Drehzahl der Motorwelle 18 auf die Drehzahl des Schneidrades 14 verringern. Im Ausführungsbeispiel hat das Untersetzungsgetriebe 13 ein mehrstufiges Planetengetriebe 19, mit dem die Motorwelle 18 mit einer Abtriebswelle 20 antriebsverbunden ist. Sie ist im Gehäusebereich 12 mittels wenigstens eines Lagers 21, vorzugsweise eines Wälzlagers, drehbar abgestützt und trägt am freien Ende ein Kegelrad 22, das mit einem Kegelrad 23 kämmt, das drehfest mit dem Schneidrad 14 verbunden ist. Es sitzt auf einer Achse 24, die sich senkrecht zur Motorwelle 18 erstreckt und im Gehäuseansatz 16 angeordnet ist. Der Schneidrand 25 des Schneidrades 14 wird über den größten Teil seines Umfanges durch eine Schutzwand 26 abgedeckt, so dass nur der Teil des Schneidrandes 25 freiliegt, mit dem das Rohr 15 durchgetrennt wird. Die Schutzwand 26 ist vorteilhaft einstückig mit der Wand des Gehäusebereiches 12 ausgebildet.

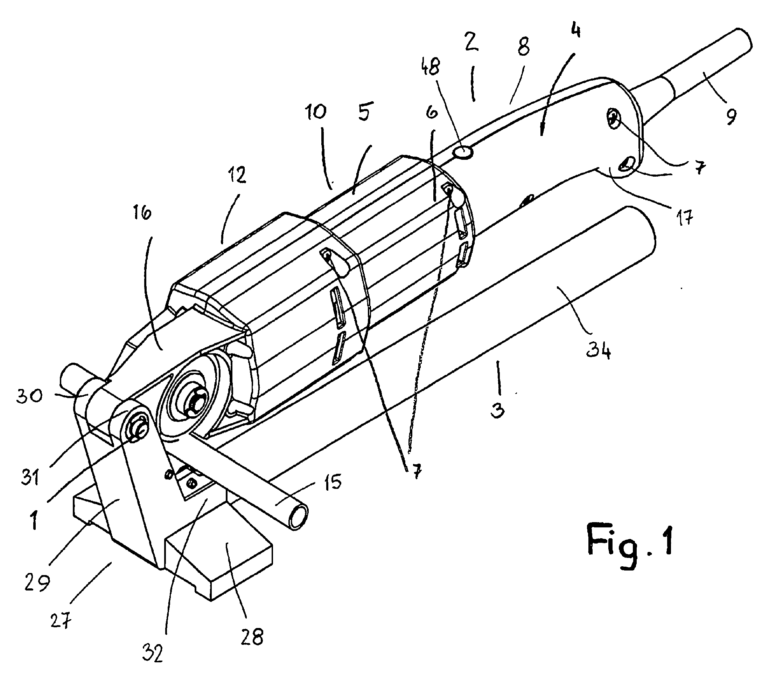

Der Werkzeugteil 3 hat einen Ständer 27 mit einem Fußteil 28, von dem eine Stütze 29 absteht. Sie ist am oberen freien Ende gabelförmig ausgebildet und hat zwei Schenkel 30, 31 (Fig. 1), zwischen die der Gehäuseansatz 16 ragt. Der Gehäuseansatz 16 liegt mit ebenen Seitenflächen an den einander zugewandten Innenseiten der Schenkel 30, 31 an. Dadurch ist eine einwandfreie Führung des Werkzeugteiles 2 während des Trennvorganges möglich, so dass ein sauberer Trennschnitt erreicht wird. Die Schwenkachse 1 erstreckt sich durch die Schenkel 30, 31 und den Gehäuseansatz 16. Die Stütze 29 liegt unter einem stumpfen Winkel zum Fußteil 28. Dadurch ist es möglich, mit dem Rohrtrennwerkzeug trotz seiner kompakten Ausbildung auch im Durchmesser größere Rohre durchtrennen zu können. Die Schwenkachse 1 wird durch einen Steckbolzen gebildet, der durch die Gabelschenkel 30, 31 und den Gehäuseansatz 16 gesteckt und mit Sicherungsringen axial gesichert wird.

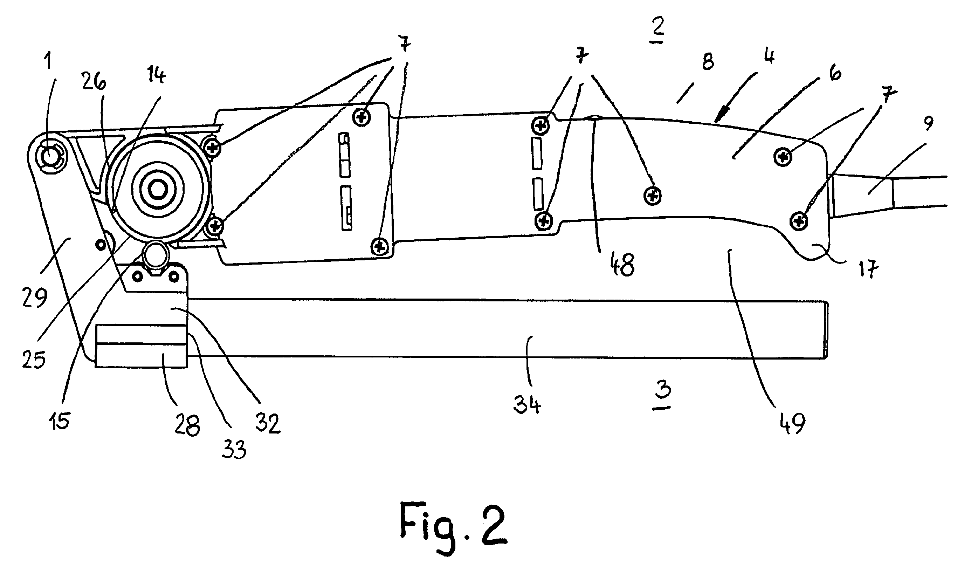

An die Stütze 29 schließt ein Lagerteil 32 an, der in Richtung auf den Werkzeugteil 2 über den Fußteil 28 übersteht. Wie Fig. 2 zeigt, haben der Lagerteil 32 und der Fußteil 28 eine gemeinsame Stirnseite 33, über die senkrecht ein Abstützteil 34 ragt. Es hat im Ausführungsbeispiel kreisförmigen Querschnitt und wird durch ein Rohr oder eine Stange gebildet. Der kreisförmige Querschnitt hat den Vorteil, dass der Abstützteil 34 bequem vom Benutzer des Rohrtrennwerkzeuges umgriffen werden kann. Die beiden Werkzeugteile 2, 3 sind vorteilhaft etwa gleich lang.

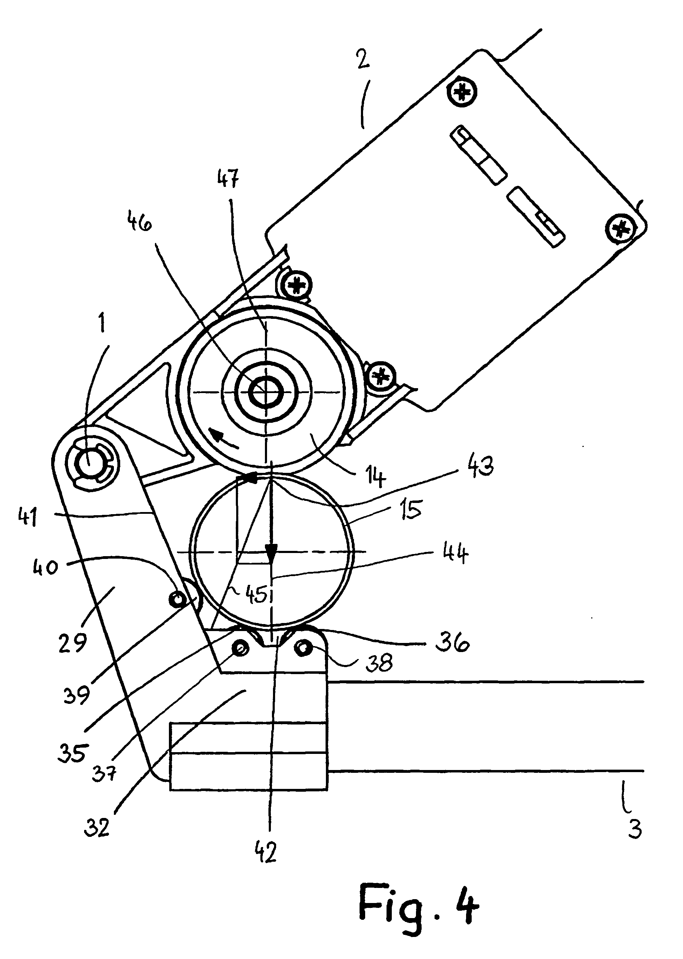

Im Lagerteil 32 sind wenigstens zwei mit Abstand nebeneinander liegende Abstützrollen 35, 36 frei drehbar gelagert (Fig. 4). Die Abstützrollen 35, 36 stehen geringfügig über den Lagerteil 32 so weit vor, dass das durchzutrennende Rohr 15 zuverlässig auf ihnen abgestützt werden kann. Je nach Breite des Lagerteiles 32 können auch zwei oder mehr Abstützrollen 35, 36 hintereinander auf der Achse 37, 38 angeordnet sein.

Die Stütze 29 ist mit wenigstens einer weiteren Abstützrolle 39 versehen, die frei drehbar auf einer Achse 40 sitzt. Je nach Breite der Stütze 29 können auf der Achse 40 auch zwei oder mehr Abstützrollen 39 hintereinander angeordnet sein. Die Achse 40 liegt parallel zu den Achsen 37, 38, auf denen die Abstützrollen 35, 36 ebenfalls frei drehbar sitzen. Während die Achsen 37, 38 auf gleicher Höhe liegen, ist die Achse 40 im Bereich oberhalb der Achsen 37, 38 angeordnet. Die Abstützrolle 39 steht über die dem Lagerteil 32 zugewandte Außenseite 41 der Stütze 29 vor. Vorteilhaft haben alle Abstützrollen 35, 36, 39 gleichen Durchmesser. Wie Fig. 4 zeigt, steht die Abstützrolle 39 weiter über die Außenseite 41 vor als die Abstützrollen 35, 36 über den Lagerteil 32.

Im Bereich zwischen den Abstützrollen 35, 36 ist der Lagerteil 32 mit einer Vertiefung 42 versehen. Sie erstreckt sich bis etwa in Höhe der Achsen 37, 38. Die Vertiefung 42 ist so ausgebildet, dass die Abstützrollen 35, 36 auch über den Rand der Vertiefung 42 vorstehen. Dadurch ist es möglich, im Durchmesser auch sehr kleine Rohre 15 zu durchtrennen. Ihr Durchmesser muss nur größer sein als der kleinste Abstand zwischen den beiden Abstützrollen 35, 36. Dann kann auch dieses kleine Rohr noch auf den Abstützrollen 35, 36 beim Durchtrennvorgang abgestützt werden, ohne dass es in Berührung mit dem Lagerteil 32 gelangt.

Um ein Rohr 15 zu durchtrennen, wird der Werkzeugteil 2 um die Achse 1 so weit aufwärts geschwenkt, dass das Rohr 15 auf die Abstützrollen 35, 36 aufgelegt werden kann. In Fig. 4 ist beispielhaft ein im Durchmesser größeres Rohr 15 dargestellt, das mit dem Rohrtrennwerkzeug durchtrennt werden soll. Dieses Rohr 15 hat einen solchen Durchmesser, dass es nicht nur auf den Abstützrollen 35, 36 aufliegt, sondern auch an der Abstützrolle 39 anliegt. Nach dem Einlegen des Rohres 15 wird der Werkzeugteil 2 um die Achse 1 in Richtung auf den Werkzeugteil 3 geschwenkt, bis das Schneidrad 14 in Kontakt mit dem Rohr 15 gelangt. Der Werkzeugteil 2 ist so ausgebildet und relativ zum Werkzeugteil 3 angeordnet, dass der Kontaktbereich 43 zwischen dem Schneidrad 14 und dem Rohr 15 in einer Axialebene 44 des Rohres 15 liegt, die sich zwischen den beiden Abstützrollen 35, 36 vorzugsweise mittig erstreckt. Das Schneidrad 14 wird in der Darstellung gemäß Fig. 4 im Uhrzeigersinn drehbar angetrieben. Dadurch tritt nicht nur eine Kraftkomponente in Radialrichtung, sondern auch in Tangentialrichtung auf, die das Rohr 15 in Richtung auf die Stütze 29 belastet. Die somit auf das Rohr 15 wirkende resultierende Kraft 45 führt dazu, dass das Rohr 45 beim Trennvorgang in Richtung auf die Abstützrolle 39 belastet wird.

Die den Kontaktbereich 43 zwischen Schneidrad 14 und Rohr 15 enthaltende Axialebene 44 hat geringen Abstand von der die Drehachse 46 des Schneidrades 14 enthaltenden Axialebene 47. Diese Axialebene 47 liegt auf der der Stütze 29 zugewandten Seite der Axialebene 44 des Rohrs 15. Diese Anordnung der beiden Axialebenen 44, 47 führt ebenfalls dazu, dass das Rohr 15 während des Trennvorgangs gegen die Abstützrolle 39 gedrückt und dadurch zuverlässig abgestützt wird.

Die Schwenkachse 1 liegt im Bereich oberhalb der Achsen 37, 38, 40 für die frei drehbaren Abstützrollen 35, 36, 39. Dadurch können mit dem kompakten Rohrtrennwerkzeug problemlos Rohre mit größeren Durchmessern durchtrennt werden. Hierzu trägt bei, dass zumindest die Außenseite 41 des Stützteils 29 unter einem stumpfen Winkel zu der die Achsen 37, 38 der Abstützrollen 35, 36 enthaltenden Ebene liegt. Der Neigungswinkel der Außenseite 41 kann beispielsweise zwischen 110° und 130° liegen. Dabei ist die Stütze 29 so lang, dass der Werkzeugteil 2 um die Achse 1 so weit aufwärts gegenüber dem Werkzeugteil 3 geschwenkt werden kann, dass Rohre größeren Durchmessers mit dem Schneidrad 14 einwandfrei durchtrennt werden können.

Der Abstand der Schwenkachse 1 von den Abstützrollen 35, 36, 39 ist so gewählt, dass einerseits im Durchmesser große Werkstücke vom Schneidrad 14 erfasst werden, dass aber auch im Durchmesser kleine Rohre zuverlässig durchtrennt werden können. Die Stütze 29 verläuft im Ausführungsbeispiel über ihre Länge geradlinig. Es ist möglich, dass die Schwenkachse 1 an einem beispielsweise vertikal abgewinkelten Endbereich der Stütze 29 vorgesehen ist.

Die Schwenkachse 1 zwischen den beiden Werkzeugteilen 2, 3 ist so angeordnet, dass der Kontaktbereich 43 zwischen dem Schneidrad 14 und dem Rohr 15 unabhängig vom Durchmesser des Rohres 15 in einer Axialebene 44 des Rohres 15 liegt, die sich zwischen den beiden Abstützrollen 35, 36 bzw. deren Achsen 37, 38 erstreckt. Dadurch wird insbesondere erreicht, dass beim Trennvorgang der Vorschubdruck, der durch das drehbar angetriebene Schneidrad 14 beim Verschwenken des Werkzeugteiles 2 ausgeübt wird, in den Bereich zwischen den beiden Abstützrollen 35, 36 wirkt, so dass das Rohr 15 beim Trennvorgang fest gegen die beiden Abstützrollen 35, 36 gedrückt wird.

Ist in das Rohrtrennwerkzeug kein Rohr 15 eingelegt, dann kann der Werkzeugteil 2 gegenüber dem Werkzeugteil 3 um die Achse 1 so weit geschwenkt werden, bis die beiden Werkzeugteile 2, 3 aneinander liegen. In dieser Grundstellung liegt die Schwenkachse 1 im Bereich oberhalb der Drehachse 46 des Schneidrades 14, bezogen auf die Lage gemäß Fig. 4.

Fig. 4 zeigt einen weiteren beispielhaften Anwendungsfall, bei dem ein im Durchmesser kleines Rohr 15 durch das Schneidrad 14 durchgetrennt wird. Aufgrund des kleinen Durchmesser liegt das Rohr 14 nur auf den Abstützrollen 35, 36 auf. Die vom Schneidrad 14 beim Trennvorgang auf das Rohr 15 ausgeübte resultierende Kraft wirkt in den Bereich zwischen den beiden Achsen 37, 38 für die Abstützrollen 35, 36. Dadurch wird erreicht, dass das Rohr 15 beim Trennvorgang nicht von den Abstützrollen 35, 36 in Richtung auf die Stütze 29 weggerollt wird. Beim Durchtrennen eines im Durchmesser größeren Rohres 15 wirkt die resultierende, auf das Rohr wirkende Kraft in den Bereich zwischen der Achse 40 der Abstützrolle 39 und der Achse 37 für die Abstützrolle 35 (Fig. 4). Die Abstützrolle 39 der Stütze 29 sorgt in diesem Fall in der beschriebenen Weise dafür, dass das Rohr 15 beim Trennvorgang zuverlässig abgestützt und nicht von den Abstützrollen 35, 36 weggedrückt wird. Beim Durchtrennen des im Durchmesser kleinen Rohres 15 befindet sich die Schwenkachse 1 im Bereich oberhalb der Drehachse 46 des Schneidrades 14.

Wenn das Rohr 15 einen größeren Durchmesser als beim Ausführungsbeispiel gemäß Fig. 4 hat, ist es möglich, dass das Rohr beim Trennvorgang nur noch an den Abstützrollen 36 und 39 abgestützt wird, während das Rohr Abstand von der Abstützrolle 35 hat. Auch in diesem Falle wird das Rohr 15 beim Trennvorgang einwandfrei abgestützt.

Um die Handhabung des Rohrtrennwerkzeuges beim Trennvorgang zu erleichtern, befindet sich ein Schalter 48 zum Ein- und Ausschalten des Antriebsmotors 11 auf der Oberseite des Gehäusebereiches 8 (Fig. 1). Da der Gehäusebereich 8 als Griffbereich dient, kann der Schalter 48 bequem betätigt werden.

Während des Trennvorganges liegt das Rohrtrennwerkzeug vorzugsweise mit seinem Fußteil 28 auf einer Unterlage, wie auf dem Boden, einem Tisch oder dergleichen auf. Dadurch kann beim Trennvorgang eine ausreichend hohe Kraft auf den Werkzeugteil 2 aufgebracht werden. Aufgrund des Abstützteiles 34 ist es auch möglich, das Rohrtrennwerkzeug während des Trennvorganges in der Hand zu halten.

Da das Schneidrad 14 im Werkzeugteil 2 und die Abstützrollen 35, 36, 39 im anderen Werkzeugteil 3 vorgesehen sind, ist eine zuverlässige Durchtrennung des Rohres 15 gewährleistet. Das Rohr 15 wird durch das drehbar angetriebene Schneidrad 14 beim Trennvorgang durch Reibung gedreht. Da die Abstützrollen 35, 36, 39 auf den Achsen 37, 38, 40 frei drehbar sind, wird das Rohr 15 durch das Schneidrad 14 problemlos während des Trennvorgangs getrennt, so dass das Rohr einwandfrei durchtrennt werden kann. Mit dem bevorzugten mehrstufigen Planetengetriebe 19 lässt sich bei kompakter Ausbildung des Untersetzungsgetriebes 13 eine ausreichende Untersetzung erreichen. In Verbindung mit der nachgeschalteten Getriebestufe 22, 23 wird das Schneidrad 14 mit der erforderlichen Drehzahl angetrieben.

Der in Richtung auf den Werkzeugteil 3 vorstehende Gehäuseteil 17 des Gehäuses 4 gewährleistet beim Trennvorgang auch einen Schutz gegen Verklemmen der Finger zwischen den beiden Werkzeugteilen 2 und 3. Wenn der vorstehende Gehäuseteil 17 mit dem Abstützteil 34 des Werkzeugteiles 3 in Berührung kommt, bleibt ein ausreichender Freiraum 49 (Fig. 2) im Bereich zwischen dem Gehäusebereich 8 und dem Abstützteil 34.

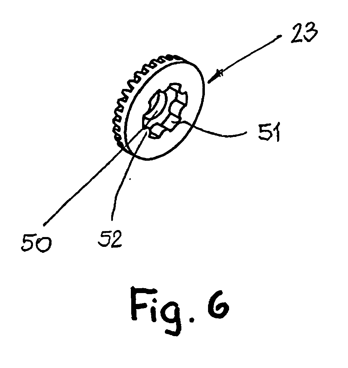

Das Kegelrad 23 ist mit einer zentralen Durchgangsöffnung 50 versehen (Fig. 6) deren Wandung 51 eine Profilierung aufweist. Sie ist im Ausführungsbeispiel so gestaltet, dass über den Umfang der Wandung 51 gleichmäßig verteilt im Querschnitt teilkreisförmige Erhöhungen 52 vorgesehen sind.

Das Schneidrad 14 ist mit einem axialen, hohlen Ansatz 53 (Fig. 3) versehen, dessen Außenwandung komplementär zur Innenwand 51 der Durchgangsöffnung 50 des Kegelrades 23 ausgebildet ist. Dadurch kann das Kegelrad 23 durch einen einfachen Steckvorgang in Drehrichtung formschlüssig mit dem Schneidrad 14 bzw. dessen Ansatz 53 verbunden werden. Durch diese Gestaltung von Schneidrad 14 und Kegelrad 23 ist eine einfache Montage und einfache Steckverbindung zwischen beiden Teilen möglich.

Die Wandung 51 der Durchgangsöffnung 50 des Kegelrades 23 kann selbstverständlich abweichend vom in Fig. 6 dargestellten Ausführungsbeispiel jede andere geeignete Profilierung aufweisen. Der Ansatz 53 des Schneidrades 14 weist dann eine entsprechende komplementäre Außenprofilierung auf.

## Patentansprüche

1. Rohrtrennwerkzeug mit zwei gegeneinander bis in eine Grundstellung verschwenkbaren Werkzeugteilen (2, 3), in der die Werkzeugteile (2, 3) ohne Zwischenlage eines durchzutrennenden Rohres (15) gegeneinander geschwenkt sind und aneinanderliegen, von denen der eine Werkzeugteil (2) das Schneidrad (14) und der andere Werkzeugteil (3) nahe seinem freien Ende eine von einem Fussteil (28) abstehende Stütze (29) und in einem Lagerteil (32) angeordnete Abstützrollen (35, 36, 39) für das durchzutrennende Rohr (15) aufweist, die auf Achsen (37, 38, 40) drehbar gelagert sind, wobei die Schwenkachse (1) zwischen dem einen Ende der beiden Werkzeugteile (2, 3) in der Grundstellung im Bereich oberhalb der Achsen (37, 38, 40) der Abstützrollen (35, 36, 39) liegt, wobei der eine Werkzeugteil (2) ein Gehäuse (4) hat, in dem ein Antriebsmotor (11) untergebracht und das Schneidrad (14) drehbar gelagert ist, das mit dem Antriebsmotor (11) drehbar antreibbar ist, wobei das Schneidrad (14) im Bereich zwischen der Schwenkachse (1) und dem Antriebsmotor (11) im Gehäuse (4) liegt, wobei das Gehäuse (4) einen Griff beim Trennvorgang bildet, und wobei das Schneidrad (14) das Rohr (15) beim Trennvorgang um seine Achse drehbar antreibt, **dadurch gekennzeichnet, dass** zumindest die den Abstützrollen (35, 36) zugewandte Außenseite (41) der Stütze (29) unter einem stumpfen Winkel zu einer die Achsen (37, 38) der Abstützrollen (35, 36) enthaltenden Ebene liegt, und dass die Stütze (29) mit wenigstens einer weiteren Abstützrolle (39) versehen ist, die frei drehbar auf einer Achse (40) sitzt.

2. Rohrtrennwerkzeug nach Anspruch 1,
**dadurch gekennzeichnet, dass** zwei Achsen (37, 38) für die Abstützrollen (35, 36) auf gleicher Höhe mit Abstand nebeneinander liegen.

3. Rohrtrennwerkzeug nach einem der Ansprüche 1 bis 2,
**dadurch gekennzeichnet, dass** die an der Stütze (29) vorgesehene Abstützrolle (39) weiter über die Außenseite (41) der Stütze (29) vorsteht als die anderen Abstützrollen (35, 36) über den Lagerteil (32).

4. Rohrtrennwerkzeug nach einem der Ansprüche 1 bis 3,
**dadurch gekennzeichnet, dass** der Abstand zwischen der Achse (40) der stützenseitigen Abstützrolle (39) und den Achsen (37, 38) der lagerteilseitigen Abstützrollen (35, 36) kleiner ist als der Abstand zwischen der Achse (40) der stützenseitigen Abstützrolle (39) und der Schwenkachse (1).

5. Rohrtrennwerkzeug nach einem der Ansprüche 1 bis 4,
**dadurch gekennzeichnet, dass** die Schwenkachse (1) zwischen den Werkzeugteilen (2, 3) so angeordnet ist, dass unabhängig vom Durchmesser des Rohres (15) der Kontaktbereich (43) zwischen dem Schneidrad (14) und dem Rohr (15) zumindest etwa in einer zwischen den Achsen (37, 38) der lagerteilseitigen Abstützrollen (35, 36) sich erstreckenden Vertikalebene (44) liegt, die senkrecht zu einer die Achsen (37, 38) der lagerteilseitigen Abstützrollen (35, 36) enthaltenden Ebene verläuft.

6. Rohrtrennwerkzeug nach einem der Ansprüche 1 bis 5,
**dadurch gekennzeichnet, dass** die Drehachse (46) des Schneidrades (14) in der Grundstellung der Werkzeugteile (2, 3) im Bereich zwischen der Schwenkachse (1) und den Achsen (37, 38, 40) der Abstützrollen (35, 36, 39) liegt.

7. Rohrtrennwerkzeug nach einem der Ansprüche 1 bis 6,
**dadurch gekennzeichnet, dass** die Stütze (29) am freien Ende gabelförmig ausgebildet ist, und dass der eine Werkzeugteil (2) zwischen Schenkel (30, 31) der Stütze (29) eingreift.

8. Rohrtrennwerkzeug nach einem der Ansprüche 1 bis 7,
**dadurch gekennzeichnet, dass** die Schwenkachse (1) ein lösbar an der Stütze (29) gehaltener Steckbolzen ist.

9. Rohrtrennwerkzeug nach einem der Ansprüche 1 bis 8,
**dadurch gekennzeichnet, dass** eine Schneidkante (25) des Schneidrades (14) über den größten Teil ihres Umfanges abgedeckt ist.

10. Rohrtrennwerkzeug nach einem der Ansprüche 1 bis 9,
**dadurch gekennzeichnet, dass** im Gehäuse (4) der Antriebsmotor (11) zwischen einem Getriebe (13) und einer Elektronik liegt.

11. Rohrtrennwerkzeug nach einem der Ansprüche 1 bis 10,
**dadurch gekennzeichnet, dass** die Höhe und/oder die Breite des Gehäuses (4) vom Schneidrad (14) aus stufenweise abnehmen.

12. Rohrtrennwerkzeug nach Anspruch 10 oder 11,
**dadurch gekennzeichnet, dass** das Gehäuse (4) mit einem Gehäuseansatz (16) zwischen die Schenkel (30, 31) der Stütze (29) eingreift, der an den einander zugewandten Innenseiten der Schenkel (30, 31) der Stütze (29) beim Verschwenken des Werkzeugteiles (2) geführt ist.

13. Rohrtrennwerkzeug nach einem der Ansprüche 1 bis 12,
**dadurch gekennzeichnet, dass** das Schneidrad (14) in Umfangsrichtung formschlüssig mit einem vorteilhaft als Kegelrad ausgebildeten Zahnrad (23) verbunden ist.

14. Rohrtrennwerkzeug nach Anspruch 13,
**dadurch gekennzeichnet, dass** das Zahnrad (23) eine Öffnung (50) aufweist, deren Wandung (51) mit einer Profilierung (52) versehen ist, und dass das Schneidrad (14) mit einer außenseitigen, an die Profilierung (52) des Zahnrades (23) angepassten Gegenprofilierung versehen ist und einen axialen Ansatz (53) aufweist, der in die Öffnung (50) des Zahnrades (23) ragt.

## Claims

1. Pipe separating tool with two tool parts (2, 3) which can be swung against each other into a basic position, in which the tool parts (2, 3) are swung against each other and rest at each other without intermediate layer of a tube (15) to be separated, of which the one tool part (2) comprises the cutting wheel (14) and the other tool part (3) near its free end comprises a support (29), protruding from a base part (28) and support rollers (35, 36, 39), arranged in a bearing part (32) for the tube (15) to be separated, and which are pivoted on axles (37, 38, 40), whereas the pivoting axis (1) is positioned between one end of the two tool parts (2, 3) in the basic position in the area above the axles (37, 38; 40) of the support rollers (35, 36, 39), whereas the one tool part (2) includes a housing (4) containing a driving motor (11) and in which the cutting wheel (14) is mounted rotatably, which can be rotatably driven by the driving motor (11), whereas the cutting wheel (14) is positioned in the housing (4) in the area between the pivoting axis (1) and the driving motor (11), whereas the housing (4) forms a handle during the cutting process and whereas the cutting wheel (14) drives rotatably the pipe (15) around its axis during the cutting process,
**characterised in that** at least the outside (41) of the support (29), facing the support rollers (35, 36) is positioned at an obtuse angle to a plane, containing the axles (37, 38) of the support rollers (35, 36), and that the support (29) is provided with at least one additional support roller (39), positioned freely rotatable on an axle (40).

2. Pipe separating tool according to claim 1,
**characterised in that** two axles (37, 38) for the support rollers (35, 36) are positioned at the same height at a distance from each other.

3. Pipe separating tool according to one of the claims 1 to 2, **characterised in that** the support roller (39), provided at the support (29) protrudes farther over the outside (41) of the support (29) than the other support rollers (35, 36) over the bearing part (32).

4. Pipe separating tool according to one of the claims 1 to 3, **characterised in that** the distance between the axle (40) of the support roller (39) on the support's side and the axles (37, 38) of the support rollers (35, 36) on the bearing part's side is smaller than the distance between the axle (40) of the support roller (39) on the support's side and the pivoting axis (1).

5. Pipe separating tool according to one of the claims 1 to 4, **characterised in that** the pivoting axis (1) between the tool parts (2, 3) is so arranged, that, independent from the diameter of the pipe (15), the contact zone (43) between the cutting wheel (14) and the pipe (15), is at least approximately on a vertical plane (44), which extends between the axles (37, 38) of the support rollers (35, 36) on the bearing part's side, and which runs vertically to a plane, containing the axles (37, 38) of the support rollers (35, 36) on the bearing part's side.

6. Pipe separating tool according to one of the claims 1 to 5, **characterised in that** the rotational axis (46) of the cutting wheel (14) is placed in the basic position of the tool parts (2, 3) in the zone between the pivoting axis (1) and the axles (37, 38, 40) of the supporting rolls (35, 36, 39).

7. Pipe separating tool according to one of the claims 1 to 6, **characterised in that** the support (29) at its free end is configured in the form of a fork and that one tool part (2) engages between brackets (30, 31) of the support (29).

8. Pipe separation tool according to one of the claims 1 to 7, **characterised in that** the pivoting axis (1) is a socket pin, releasably held in the support (29).

9. Pipe separation tool according to one of the claims 1 to 8,
**characterised in that** a cutting edge (25) of the cutting wheel (14) is covered over the greatest part of its circumference.

10. Pipe separation tool according to one of the claims 1 to 9,
**characterised in that** in the housing (4), the driving motor (11) is positioned between a gear (13) and an electronics.

11. Pipe separation tool according to one of the claims 1 to 10,
**characterised in that** the height and/or the width of the housing (4) gradually reduces away from the cutting wheel (14).

12. Pipe separation tool according to claim 10 or 11,
**characterised in that** the housing (4) engages between the brackets (30, 31) of the support (29) with a projection of the housing (16), which, during the pivoting of the tool part (2) is guided by the inner surfaces of the brackets (30, 31), which are facing each another.

13. Pipe separation tool according to one of the claims 1 to 12,
**characterised in that** the cutting wheel (14) is connected in the circumferential direction in form-fitting manner with a gear wheel (23), which is advantageously shaped as bevel gear.

14. Pipe separation tool according to claim 13,
**characterised in that** the gear wheel (23) comprises an opening (50), the wall (51) of which is provided with a profile (52), and that the cutting wheel (14) is provided with an outside counter-profile, adapted to the profile (52) of the gear wheel (23) and which comprises a projection (53), projecting into the opening (50) of the gear wheel (23).

## Revendications

1. Outil de tronçonnage de tubes, comprenant deux parties d'outil (2, 3) pouvant pivoter l'une vers l'autre jusque dans une position de base dans laquelle les parties d'outil (2, 3) sont pivotées l'une vers l'autre sans interposition d'un tube (15) à tronçonner et sont appliquées l'une contre l'autre, et dont une partie d'outil (2) comporte la roue de coupe (14) et l'autre partie d'outil (3) présente, au voisinage de son extrémité libre, un support (29) issu d'une semelle (28) en en faisant saillie, ainsi que des rouleaux d'appui (35, 36, 39) destinés au tube (15) à tronçonner et montés dans une partie de palier (32) en rotation sur des axes (37, 38, 40), outil
dans lequel l'axe de pivotement (1) se situe entre l'une des extrémités des deux parties d'outil (2, 3) dans la position de base, dans une zone au-dessus des axes (37, 38, 40) des rouleaux d'appui (35, 36, 39),
dans lequel ladite une partie d'outil (2) comporte un carter (4) à l'intérieur duquel est logé un moteur d'entraînement (11) et est montée en rotation la roue de coupe (14) qui peut être entraînée en rotation par le moteur d'entraînement (11),
dans lequel la roue de coupe (14) se situe dans le carter (4), entre l'axe de pivotement (1) et le moteur d'entraînement (11),
dans lequel le carter (4) forme une poignée lors de l'opération de tronçonnage, et
dans lequel la roue de coupe (14) entraîne en rotation le tube (15) lors de l'opération de tronçonnage, **caractérisé en ce qu'**au moins le côté extérieur (41) du support (29), qui est dirigé vers les rouleaux d'appui (35, 36), forme un angle obtus par rapport à un plan refermant les axes (37, 38) des rouleaux d'appui (35, 36), et **en ce que** le support (29) est pourvu d'au moins un rouleau d'appui supplémentaire (39), qui est placé librement rotatif sur un axe (40).

2. Outil de tronçonnage de tubes selon la revendication 1, **caractérisé en ce que** deux axes (37, 38) pour les rouleaux d'appui (35, 36) se situent côte à côte, à une même hauteur et à distance l'un de l'autre.

3. Outil de tronçonnage de tubes selon l'une des revendications 1 à 2, **caractérisé en ce que** le rouleau d'appui (39) prévu sur le support (29) dépasse davantage du côté extérieur (41) du support (29), que les autres rouleaux d'appui (35, 36) ne dépassent de la partie de palier (32).

4. Outil de tronçonnage de tubes selon l'une des revendications 1 à 3, **caractérisé en ce que** la distance entre l'axe (40) du rouleau d'appui (39) se trouvant sur le support, et les axes (37, 38) des rouleaux d'appui (35, 36) se trouvant dans la partie de palier, est inférieure à la distance entre l'axe (40) du rouleau d'appui (39) se trouvant sur le support et l'axe de pivotement (1).

5. Outil de tronçonnage de tubes selon l'une des revendications 1 à 4, **caractérisé en ce que** l'axe de pivotement (1) entre les parties d'outil (2, 3) est agencé de manière telle, que, indépendamment du diamètre du tube (15), la zone de contact (43) entre la roue de coupe (14) et le tube (15) se situe au moins environ dans un plan vertical (44), qui s'étend entre les axes (37, 38) des rouleaux d'appui (35, 36) se trouvant dans la partie de palier, et qui est perpendiculaire à un plan contenant les axes (37, 38) des rouleaux d'appui (35, 36) se trouvant dans la partie de palier.

6. Outil de tronçonnage de tubes selon l'une des revendications 1 à 5, **caractérisé en ce que** l'axe de rotation (46) de la roue de coupe (14) se situe, dans la position de base des parties d'outil (2, 3), dans une zone entre l'axe de pivotement (1) et les axes (37, 38, 40) des rouleaux d'appui (35, 36, 39).

7. Outil de tronçonnage de tubes selon l'une des revendications 1 à 6, **caractérisé en ce que** le support (29) est d'une configuration en forme de fourche à son extrémité libre, et **en ce que** ladite une partie d'outil (2) s'engage entre les branches (30, 31) du support (29).

8. Outil de tronçonnage de tubes selon l'une des revendications 1 à 7, **caractérisé en ce que** l'axe de pivotement (1) est une broche enfichable maintenue de manière démontable sur le support (29).

9. Outil de tronçonnage de tubes selon l'une des revendications 1 à 8, **caractérisé en ce qu'**une arête de coupe (25) de la roue de coupe (14) est recouverte sur la plus grande partie de sa périphérie.

10. Outil de tronçonnage de tubes selon l'une des revendications 1 à 9, **caractérisé en ce que** dans le carter (4), le moteur d'entraînement (11) est placé entre une transmission (13) et une électronique.

11. Outil de tronçonnage de tubes selon l'une des revendications 1 à 10, **caractérisé en ce que** la hauteur et/ou la largeur du carter (4) diminuent de manière étagée à partir de la roue de coupe (14).

12. Outil de tronçonnage de tubes selon la revendication 10 ou la revendication 11, **caractérisé en ce que** le carter (4) s'engage entre les branches (30, 31) du support (29), avec un embout de carter (16) qui, lors du pivotement de la partie d'outil (2), est guidé sur les côtés intérieurs dirigés mutuellement l'un vers l'autre, des branches (30, 31) du support (29).

13. Outil de tronçonnage de tubes selon l'une des revendications 1 à 12, **caractérisé en ce que** la roue de coupe (14) est reliée par complémentarité de forme dans la direction périphérique, à une roue dentée (23) avantageusement réalisée en tant que roue conique.

14. Outil de tronçonnage de tubes selon la revendication 13, **caractérisé en ce que** la roue dentée (23) présente une ouverture (50) dont la paroi (51) est munie d'un profil (52), et **en ce que** la roue de coupe (14) est munie d'un profil conjugué extérieur, adapté au profil (52) de la roue dentée (23), et présente un appendice axial (53) qui s'engage dans l'ouverture (50) de la roue dentée (23).
